(19) Europäisches Patentamt
European Patent Office
Office européen des brevets

(11) Veröffentlichungsnummer : **0 314 002 B1**

(12) # EUROPÄISCHE PATENTSCHRIFT

(45) Veröffentlichungstag der Patentschrift : **11.09.91 Patentblatt 91/37**

(51) Int. Cl.$^5$ : **C09B 29/42**, D06P 1/18

(21) Anmeldenummer : **88117537.6**

(22) Anmeldetag : **21.10.88**

(54) **Pyridonazofarbstoffe und ihre Verwendung.**

Die Akte enthält technische Angaben, die nach dem Eingang der Anmeldung eingereicht wurden und die nicht in dieser Patentschrift enthalten sind.

(30) Priorität : **30.10.87 DE 3736817**

(43) Veröffentlichungstag der Anmeldung : **03.05.89 Patentblatt 89/18**

(45) Bekanntmachung des Hinweises auf die Patenterteilung : **11.09.91 Patentblatt 91/37**

(84) Benannte Vertragsstaaten : **CH DE FR GB IT LI**

(56) Entgegenhaltungen :
**FR-A- 2 153 417**
**FR-A- 2 265 824**
**JP-A-58 136 656**

(73) Patentinhaber : **BASF Aktiengesellschaft
Carl-Bosch-Strasse 38
W-6700 Ludwigshafen (DE)**

(72) Erfinder : **Hansen, Guenter, Dr.
Alwin-Mittasch-Platz 8
W-6700 Ludwigshafen (DE)**
Erfinder : **Lamm, Gunther, Dr.
Heinrich-Heine-Strasse 7
W-6733 Hassloch (DE)**
Erfinder : **Loeffler, Hermann
Haydnstrasse 23
W-6720 Speyer (DE)**

**EP 0 314 002 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Pyridonazofarbstoffe, die eine Diazokomponente auf Basis eines 3-Aminobenzoesäureesters und eine Kupplungskomponente auf Basis eines 1-($C_1$-$C_3$-Alkyl)-2-hydroxypyrid-6-ons aufweisen, sowie ihre Verwendung zum Färben von Polyestergeweben.

Aus der JP-A-136656/1983 sind bereits Azofarbstoffe, die Diazokomponenten auf Basis von speziellen 2-, 3- oder 4-Aminobenzoesäureestern und Kupplungskomponenten auf Basis von 1-Alkyl-2-hydroxy-4-methyl-5-cyanopyrid-6-onen aufweisen, bekannt. Es hat sich jedoch gezeigt, daß die dort beschriebenen Farbstoffe noch Mängel in ihren anwendungstechnischen Eigenschaften aufweisen.

Aufgabe der vorliegenden Erfindung war es nun, neue Pyridonazofarbstoffe bereitzustellen, die ein vorteilhaftes anwendungstechnisches Eigenschaftsprofil besitzen.

Es wurden neue Pyridonazofarbstoffe der Formel I

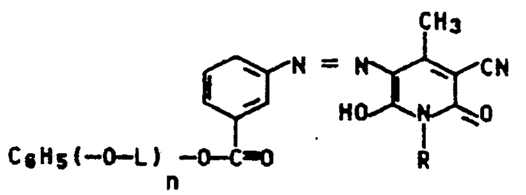

(I)

gefunden, in der

L $C_2$- oder $C_3$-Alkylen,
R Methyl oder Ethyl
n 1, 2 oder 3 bedeuten.

Reste L sind z.B. Ethylen oder 1,2- oder 1,3-Propylen.

Reste R sind z.B. Methyl oder Ethyl.

Beispielhafte Reste für die Gruppierung $C_6H_5(-O-L)_n$ sind $C_6H_5O-CH_2CH_2-$, $C_6H_5O-CH_2CH(CH_3)-$, $C_6H_5O-CH(CH_3)CH_2-$, $C_6H_5O-CH_2CH_2O-CH_2CH_2-$, $C_6H_5O-CH_2CH_2CH_2O-CH_2CH_2-$, $C_6H_5O-CH_2CH_2O-CH_2CH_2CH_2-$ oder $C_6H_5O-CH_2CH_2O-CH_2CH_2O-CH_2CH_2-$.

Bevorzugt sind Pyridonazofarbstoffe der Formel I, in der L Ethylen, R Methyl oder Ethyl und n 1 bedeuten.

Besonders bevorzugt sind Pyridonazofarbstoffe der Formel I, in der L Ethylen, R Methyl oder Ethyl, insbesondere Ethyl, und n 1 bedeuten.

Es ist auch möglich, die neuen Pyridonazofarbstoffe der Formel I in Mischung untereinander anzuwenden. Dabei sind solche Mischungen bevorzugt, die 85 bis 99 Gew.-% Pyridonazofarbstoffe der Formel I, in der n 1 bedeutet, und 1 bis 15 Gew.% Pyridonazofarbstoffe der Formel I, in der n 2 und/oder 3 bedeutet, enthalten. Die Prozentangaben beziehen sich dabei jeweils auf das Gesamtgewicht der in der Mischung enthaltenen Pyridonazofarbstoffe der Formel I.

Die erfindungsgemäßen Pyridonazofarbstoffe können nach an sich bekannten Methoden hergestellt werden. So kann man beispielsweise das Diazoniumsalz eines Amins der Formel II

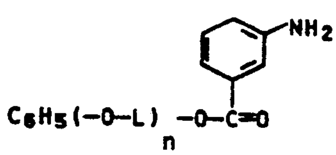

(II),

in der L und n jeweils die obengenannte Bedeutung besitzen, das auf bekanntem Weg erhalten wird, mit einem 2-Hydroxypyrid-6-on der Formel III

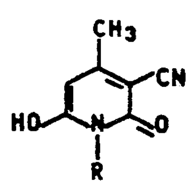

(III),

in der R die obengenannte Bedeutung besitzt, kuppeln.

Die neuen Pyridonazofarbstoffe der Formel I eignen sich in vorteilhafterweise Weise zum Färben von Polyestergeweben. Dabei ergeben sie brillante Gelb- bis Grüntöne. Die erfindungsgemäßen Farbstoffe weisen eine hohe Lichtechtheit und ein gutes Aufbauvermögen auf. Außerdem färben sie Polyestergewebe bereits bei relativ tiefer Färbetemperatur.

Die folgenden Beispiele sollen die Erfindung näher erläutern.

Beispiel 1 (nicht anspruchsgemäß)

257 g 3-Aminobenzoesäurephenylglykolester wurden bei 50 bis 60°C in 2000 ml Wasser, 8 g eines sauer wirksamen Netzmittels auf Basis eines Anlagerungsproduktes von Ethylenoxid an Oleylamin und 100 ml konzentrierter Salzsäure gelöst. Danach kühlte man die Lösung auf Raumtemperatur ab und gab gleichzeitig 200 ml konzentrierte Salzsäure und 100 g Eisessig hinzu. Das Reaktionsgemisch wurde dann durch Zugabe von Eis auf 0°C abgekühlt und anschließend unter sehr gutem Rühren mit 310 ml einer 23 gew.%igen wäßrigen Natriumnitritlösung versetzt. Man rührte 3 Stunden bei 0 bis 5°C nach und filtrierte. Im Filtrat wurde überschüssige salpetrige Säure durch Zugabe von Amidosulfonsäure zerstört. Dann ließ man 192 g 1-n-Propyl-2-hydroxy-3-cyano-4-methylpyrid-6-on, gelöst in 2000 ml Wasser und 200 g 50 gew.%iger Natronlauge, unter sehr gutem Rühren zum Filtrat laufen. Anschließend wurde der pH-Wert des Reaktionsgemischs mit Natronlauge auf einen Wert von 8,0 bis 8,5 angehoben. Man rührte dann 1 bis 2 Stunden nach und erhitzte die Suspension danach solange auf 80 bis 95°C, bis der Farbstoff in der gewünschten kristallinen Form vorlag. Das Zielprodukt wurde abgesaugt und mit Wasser salzfrei gewaschen. Nach dem Trocknen erhielt man 451 g eines gelben Pulvers, das sich in Aceton mit gelber Farbe löst und Polyethylenterephthalat-Gewebe in kräftigen, grünstichig gelben Tönen färbt. Der Schmelzpunkt des Farbstoffs beträgt 150°C. Seine Formel lautet

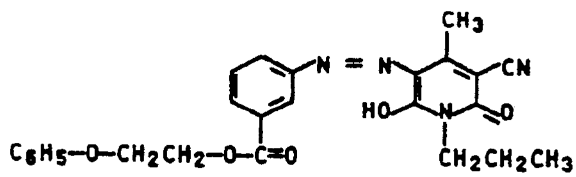

In analoger Weise werden die in der folgenden Tabelle aufgeführten anspruchsgemäßen Farbstoffe der Formel

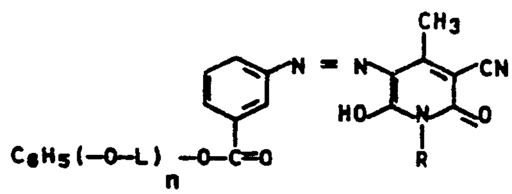

erhalten.

| Bsp. Nr. | $C_6H_5(-O-L)_n$ | R |
|---|---|---|
| 2 | $C_6H_5OCH_2CH_2$ | $CH_3$ |
| 3 | $C_6H_5OCH_2CH_2$ | $C_2H_5$ |
| 4 | $C_6H_5(OCH_2CH_2)_2$ | $CH_3$ |
| 5 | $C_6H_5(OCH_2CH_2)_2$ | $C_2H_5$ |
| 6 | $C_6H_5(OCH_2CH_2)_3$ | $CH_3$ |
| 7 | $C_6H_5(OCH_2CH_2)_3$ | $C_2H_5$ |
| 8 | $C_6H_5OCH(CH_3)CH_2$ | $CH_3$ |
| 9 | $C_6H_5OCH(CH_3)CH_2$ | $C_2H_5$ |
| 10 | $C_6H_5OCH_2CH(CH_3)$ | $CH_3$ |
| 11 | $C_6H_5OCH_2CH(CH_3)$ | $C_2H_5$ |

**Patentansprüche**

1. Pyridonazofarbstoffe der Formel I

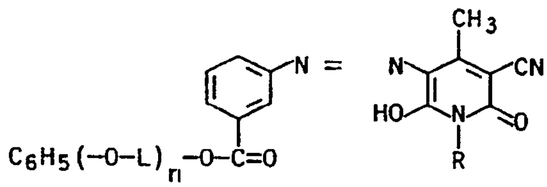 (I),

in der

L $C_2$- oder $C_3$-Alkylen,
R Methyl oder Ethyl und
n 1, 2 oder 3 bedeuten.

2. Pyridonazofarbstoffe gemäß Anspruch 1, dadurch gekennzeichnet, daß L Ethylen, R Methyl oder Ethyl und n 1 bedeutet.

3. Verwendung der Pyridonazofarbstoffe gemäß Anspruch 1 zum Färben von Polyestergeweben.

**Claims**

1. A pyridoneazo dye of the formula I

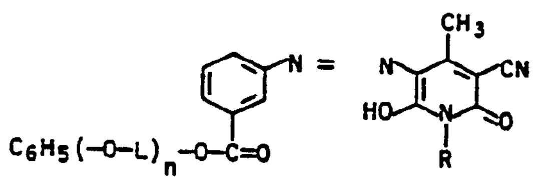 (I),

where

L is $C_2$- or $C_3$-alkylene,
R is methyl or ethyl and
n is 1, 2 or 3.

2. A pyridoneazo dye as claimed in claim 1, wherein L is ethylene, R is methyl or ethyl and n is 1.

3. Use of pyridoneazo dyes as claimed in claim 1 for dyeing polyester fabrics.

**Revendications**

1. Colorants pyridonoazoïques de formule I

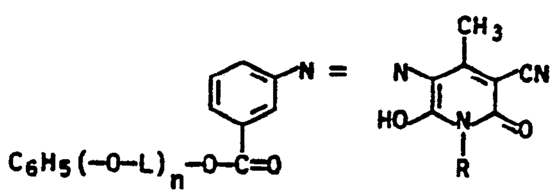 (I),

dans laquelle

L est un groupement alkylène en $C_2$ ou $C_3$
R est un groupement méthyle ou éthyle et
n vaut 1, 2 ou 3.

2. Colorants pyridonoazoïques selon la revendication 1, caractérisés en ce que L est un groupement éthylène, R est un groupement méthyle ou éthyle et n vaut 1.

3. Utilisation des colorants pyridonoazoïques selon la revendication 1 pour la coloration de tissus de polyester.